# EUROPEAN PATENT SPECIFICATION

(11) **EP 3 553 119 B1**
(45) Date of publication and mention of the grant of the patent: **25.11.2020**
(21) Application number: 19177627.7
(22) Date of filing: 03.03.2006
(51) Int. Cl.: C08J 9/14

(54) **COMPOSITIONS COMPRISING TRANS-HFC-1234ZE AND ISOBUTANE**
ZUSAMMENSETZUNGEN MIT TRANS-HFC-1234ZE UND ISOBUTAN
COMPOSITIONS COMPORTANT DU TRANS-HFC-1234ZE ET DE L'ISOBUTANE

(30) Priority: 04.03.2005 US 658543 P; 23.08.2005 US 710439 P; 01.11.2005 US 732769 P
(43) Date of publication of application: 16.10.2019
(62) Divisional of application: 18182081.2
(73) Proprietor: The Chemours Company FC, LLC, Wilmington DE 19801 (US)
(72) Inventor: Rao, Velliyur Nott Mallikarjuna, deceased (US); Minor, Barbara Haviland, Elkton, MD Maryland 21921 (US)
(74) Representative: Dannenberger, Oliver Andre

(56) References cited:
- US-A- 3 723 318
- US-A1- 2004 256 594

## Description

### CROSS REFERENCE(S) TO RELATED APPLICATION(S)

This application claims the priority benefit of U.S. Provisional Application 60/658,543, filed March 4, 2005, and U.S. Provisional Application 60/710,439, filed August 23, 2005, and U.S. Provisional Application 60/732,769, filed November 1, 2005.

### BACKGROUND OF THE INVENTION

### 1. Field of the Invention.

The present invention relates to compositions comprising a fluoroolefin and at least one other component. The compositions of the present invention are, for example, useful as foam blowing agents. 2. Description of Related Art.

The refrigeration industry has been working for the past few decades to find replacement refrigerants for the ozone depleting chlorofluorocarbons (CFCs) and hydrochlorofluorocarbons (HCFCs) being phased out as a result of the Montreal Protocol. The solution for most refrigerant producers has been the commercialization of hydrofluorocarbon (HFC) refrigerants. The new HFC refrigerants, HFC-134a being the most widely used at this time, have zero ozone depletion potential and thus are not affected by the current regulatory phase out as a result of the Montreal Protocol.

Further environmental regulations may ultimately cause global phase out of certain HFC refrigerants. Currently, the automobile industry is facing regulations relating to global warming potential for refrigerants used in mobile air-conditioning. Therefore, there is a great current need to identify new refrigerants with reduced global warming potential for the mobile air-conditioning market. Should the regulations be more broadly applied in the future, an even greater need will be felt for refrigerants that can be used in all areas of the refrigeration and air-conditioning industry.

Currently proposed replacement refrigerants for HFC-134a include HFC-152a, pure hydrocarbons such as butane or propane, or "natural" refrigerants such as CO₂. Many of these suggested replacements are toxic, flammable, and/or have low energy efficiency. Therefore, new alternative refrigerants are being sought.

US 2004/256594 A1 discloses the use of 1,3,3,3-tetrafluoropropene (HFO-1234ze) in a variety of applications, including foam blowing systems.

US 3 723 318 A discloses aerosol propellants based on 3,3,3-trifluoro-propene (HFO-1243zf) optionally in combination with further compounds such as isobutane.

The object of the present invention is to provide novel compositions that provide unique characteristics to meet the demands of low or zero ozone depletion potential and lower global warming potential.

### BRIEF SUMMARY OF THE INVENTION

The present invention relates to a composition comprising 39 to 99 weight percent trans-HFC-1234ze and 61 to 1 weight percent isobutane.

The present invention further relates to a composition as defined in claims 1 to 5 as well as to its use as a foam blowing agent, to a blowing agent as defined in claims 6 and 7, to a foamable composition as defined in claims 8 to 10, and to a method of forming a foam as defined in claim 12.

### DETAILED DESCRIPTION OF THE INVENTION

The present invention relates to compositions comprising 39 to 99 weight percent trans-HFC-1234ze and 61 to 1 weight percent isobutane.

Fluoroolefin compounds and other compounds are listed in Table 1.

**TABLE 1**

| **Compound** | **Chemical name** | **Chemical formula** |
|---|---|---|
| HFC-1225ye | 1,2,3,3,3-pentafluoropropene | CF₃CF=CHF |
| HFC-1234ze | 1,3,3,3-tetrafluoropropene | CF₃CH=CHF |
| HFC-1234yf | 2,3,3,3-tetrafluoropropene | CF₃CF=CH₂ |
| HFC-1234ye | 1,2,3,3-tetrafluoropropene | CHF₂CF=CHF |
| HFC-1243zf | 3,3,3-trifluoropropene | CF₃CH=CH₂ |
| HFC-32 | difluoromethane | CH2F2 |
| HFC-125 | pentafluoroethane | CF₃CHF₂ |
| HFC-134 | 1,1,2,2-tetrafluoroethane | CHF₂CHF₂ |
| HFC-134a | 1,1,1,2-tetrafluoroethane | CH₂FCF₃ |
| HFC-143a | 1,1,1-trifluoroethane | CH3CF3 |
| HFC-152a | 1,1-difluoroethane | CHF₂CH₃ |
| HFC-161 | fluoroethane | CH₃CH₂F |
| HFC-227ea | 1,1,1,2,3,3,3-heptafluoropropane | CF₃CHFCF₃ |
| HFC-236ea | 1,1,1,2,3,3-hexafluoropropane | CF₃CHFCHF₂ |
| HFC-236fa | 1,1,1,3,3,3-hexafluoroethane | CF₃CH₂CF₃ |
| HFC-245fa | 1,1,1,3,3-pentafluoropropane | CF₃CH₂CHF₂ |
| HFC-365mfc | 1,1,1,3,3-pentafluorobutane | CF3CH2CH2CHF2 |
| | propane | CH₃CH₂CH₃ |
| | n-butane | CH₃CH₂CH₂CH₃ |
| i-butane | isobutane | CH₃CH(CH₃)CH₃ |
| | 2-methylbutane | CH₃CH(CH₃)CH₂CH₃ |
| | n-pentane | CH₃CH₂CH₂CH₂CH₃ |
| | cyclopentane | cyclo-(C H₂)₅- |
| DME | dimethylether | CH₃OCH₃ |
| CO₂ | carbon dioxide | CO₂ |
| CF3SCF3 | bis(trifluoromethyl)sulfide | CF3SCF3 |
| | iodotrifluoromethane | CF₃I |

The individual components listed in Table 1 may be prepared by methods known in the art.

The fluoroolefin compounds HFC-1225ye, HFC-1234ze and HFC-1234ye may exist as different configurational isomers or stereoisomers. For instance, 1,3,3,3-tetra-fluoropropene (HFC-1234ze) is meant to represent the cis-isomer, trans-isomer, or any combination or mixture of both isomers in any ratio. Another example is HFC-1225ye, by which is represented the cis-isomer, trans-isomer, or any combination or mixture of both isomers in any ratio.

The present invention further provides compositions as listed in Table 2.

**TABLE 2**

| **Components** | **Concentration ranges (wt%)** |
|---|---|
| trans-HFC-1234ze/HFC-1243zf/isobutane | 98/1/1 |
| trans-HFC-1234ze/isobutane/DME | 98/1/1 |
| trans-HFC-1234ze/isobutane/ CF₃I | 98/1/1 |
| trans-HFC-1234ze/isobutane/ CF₃SCF₃ | 98/1/1 |

The compositions of the present invention may be azeotropic or near-azeotropic compositions. By azeotropic composition is meant a constant-boiling mixture of two or more substances that behave as a single substance. One way to characterize an azeotropic composition is that the vapor produced by partial evaporation or distillation of the liquid has the same composition as the liquid from which it is evaporated or distilled, i.e., the mixture distills/refluxes without compositional change. Constant-boiling compositions are characterized as azeotropic because they exhibit either a maximum or minimum boiling point, as compared with that of the non-azeotropic mixture of the same compounds. An azeotropic composition will not fractionate within a refrigeration or air conditioning system during operation, which may reduce efficiency of the system. Additionally, an azeotropic composition will not fractionate upon leakage from a refrigeration or air conditioning system. In the situation where one component of a mixture is flammable, fractionation during leakage could lead to a flammable composition either within the system or outside of the system.

A near-azeotropic composition (also commonly referred to as an "azeotrope-like composition") is a substantially constant boiling liquid admixture of two or more substances that behaves essentially as a single substance. One way to characterize a near-azeotropic composition is that the vapor produced by partial evaporation or distillation of the liquid has substantially the same composition as the liquid from which it was evaporated or distilled, that is, the admixture distills/refluxes without substantial composition change. Another way to characterize a near-azeotropic composition is that the bubble point vapor pressure and the dew point vapor pressure of the composition at a particular temperature are substantially the same. Herein, a composition is near-azeotropic if, after 50 weight percent of the composition is removed, such as by evaporation or boiling off, the difference in vapor pressure between the original composition and the composition remaining after 50 weight percent of the original composition has been removed is less than 10 percent.

An azeotropic composition of the present invention at a specified temperature is shown in Table 3.

**TABLE 3**

| **Component A** | **Component B** | **Wt% A** | **Wt% B** | **Psia** | **kPa** | **T(C)** |
|---|---|---|---|---|---|---|
| trans-HFC-1234ze | isobutane | 77.9 | 22.1 | 12.9 | 89 | -25 |

Additionally, a ternary azeotropic composition is listed in Table 4.

**TABLE 4**

| Component A | Component B | Component C | Wt% A | Wt% B | Wt% C | Pres (psi) | Pres (kPa) | Temp (°C) |
|---|---|---|---|---|---|---|---|---|
| trans-HFC-1234ze | isobutane | DME | 55.5 | 28.7 | 15.8 | 12.38 | 85.4 | -25 |

The near-azeotropic compositions of the present invention at a specified temperature are listed in Table 5.

**TABLE 5**

| **Component A** | **Component B** | **(wt% A/wt% B)** | **T(C)** |
|---|---|---|---|
| trans-H FC-1234ze | isobutane | 39-99/61-1 | -25 |

Ternary and higher order near-azeotropic compositions have also been identified as listed in Table 6.

**TABLE 6**

| Components | Near-azeotrope range (weight percent) | Temp (°C) |
|---|---|---|
| trans-HFC-1234ze/HFC-1243zf/isobutane | 98/1/1 | -25 |
| trans-HFC-1234ze/isobutane/DME | 98/1/1 | -25 |
| trans-HFC-1234ze/isobutane/ CF₃I | 98/1/1 | -25 |
| trans-HFC-1234ze/isobutane/ CF₃SCF₃ | 98/1/1 | -25 |

Certain of the compositions of the present invention are non-azeotropic compositions.

A non-azeotropic composition may have certain advantages over azeotropic or near-azeotropic mixtures. A non-azeotropic composition is a mixture of two or more substances that behaves as a mixture rather than a single substance. One way to characterize a non-azeotropic composition is that the vapor produced by partial evaporation or distillation of the liquid has a substantially different composition as the liquid from which it was evaporated or distilled, that is, the admixture distills/refluxes with substantial composition change. Another way to characterize a non- azeotropic composition is that the bubble point vapor pressure and the dew point vapor pressure of the composition at a particular temperature are substantially different. Herein, a composition is non-azeotropic if, after 50 weight percent of the composition is removed, such as by evaporation or boiling off, the difference in vapor pressure between the original composition and the composition remaining after 50 weight percent of the original composition has been removed is greater than 10 percent.

The compositions of the present invention may be prepared by any convenient method to combine the desired amounts of the individual components. A preferred method is to weigh the desired component amounts and thereafter combine the components in an appropriate vessel. Agitation may be used, if desired.

Further described herein is a method for making a refrigerant blend composition, wherein said refrigerant blend composition comprises a composition as disclosed herein, said method comprising (i) reclaiming a volume of one or more components of a refrigerant composition from at least one refrigerant container, (ii) removing impurities sufficiently to enable reuse of said one or more of the reclaimed components, (iii) and optionally, combining all or part of said reclaimed volume of components with at least one additional refrigerant composition or component.

A refrigerant container may be any container in which is stored a refrigerant blend composition that has been used in a refrigeration apparatus, air-conditioning apparatus or heat pump apparatus. Said refrigerant container may be the refrigeration apparatus, air-conditioning apparatus or heat pump apparatus in which the refrigerant blend was used. Additionally, the refrigerant container may be a storage container for collecting reclaimed refrigerant blend components, including but not limited to pressurized gas cylinders.

Residual refrigerant means any amount of refrigerant blend or refrigerant blend component that may be moved out of the refrigerant container by any method known for transferring refrigerant blends or refrigerant blend components.

Impurities may be any component that is in the refrigerant blend or refrigerant blend component due to its use in a refrigeration apparatus, air-conditioning apparatus or heat pump apparatus. Such impurities include but are not limited to refrigeration lubricants, being those described earlier herein, particulates including but not limited to metal, metal salt or elastomer particles, that may have come out of the refrigeration apparatus, air-conditioning apparatus or heat pump apparatus, and any other contaminants that may adversely effect the performance of the refrigerant blend composition.

Such impurities may be removed sufficiently to allow reuse of the refrigerant blend or refrigerant blend component without adversely effecting the performance or equipment within which the refrigerant blend or refrigerant blend component will be used.

It may be necessary to provide additional refrigerant blend or refrigerant blend component to the residual refrigerant blend or refrigerant blend component in order to produce a composition that meets the specifications required for a given product. For instance, if a refrigerant blend has 3 components in a particular weight percentage range, it may be necessary to add one or more of the components in a given amount in order to restore the composition to within the specification limits.

Compositions of the present invention have zero or low ozone depletion potential and low global warming potential (GWP). Additionally, the compositions of the present invention will have global warming potentials that are less than many hydrofluorocarbon refrigerants currently in use. One aspect of the present invention is to provide a composition with a global warming potential of less than 1000, less than 500, less than 150, less than 100, or less than 50.

The compositions of the present invention may be useful as low global warming potential (GWP) replacements for currently used refrigerants, including but not limited to R134a (or HFC-134a, 1,1,1,2-tetrafluoroethane), R22 (or HCFC-22, chlorodifluoromethane), R123 (or HFC-123, 2,2-dichloro-1,1,1-trifluoroethane), R11 (CFC-11, fluorotrichloromethane), R12 (CFC-12, dichlorodifluoromethane), R245fa (or HFC-245fa, 1,1,1,3,3-pentafluoropropane), R114 (or CFC-114, 1,2-dichloro-1,1,2,2-tetrafluoroethane), R236fa (or HFC-236fa, 1,1,1,3,3,3-hexafluoropropane), R124 (or HCFC-124, 2-chloro-1,1,1,2-tetrafluoroethane), R407C (ASHRAE designation for a blend of 52 weight percent R134a, 25 weight percent R125 (pentafluoroethane), and 23 weight percent R32 (difluoromethane), R410A (ASHRAE designation for a blend of 50 weight percent R125 and 50 weight percent R32), R417A, (ASHRAE designation for a blend of 46.6 weight percent R125, 50.0 weight percent R134a, and 3.4 weight percent n-butane), R422A (ASHRAE designation for a blend of 85.1 weight percent R125, 11.5 weight percent R134a, and 3.4 weight percent isobutane), R404A, (ASHRAE designation for a blend of 44 weight percent R125, 52 weight percent R143a (1,1,1-trifluoroethane), and 4.0 weight percent R134a) and R507A (ASHRAE designation for a blend of 50 weight percent R125 and 50 weight percent R143a). Additionally, the compositions of the present invention may be useful as replacements for R12 (CFC-12, dichlorodifluoromethane) or R502 (ASHRAE designation for a blend of 51.2 weight percent CFC-115 (chloropentafluoroethane) and 48.8 weight percent HCFC-22).

Often replacement refrigerants are most useful if capable of being used in the original refrigeration equipment designed for a different refrigerant. The compositions of the present invention may be useful as replacements for the above-mentioned refrigerants in original equipment. Additionally, the compositions of the present invention may be useful as replacements for the above mentioned refrigerants in equipment designed to use the above-mentioned refrigerants.

In another embodiment, the present invention relates to blowing agent compositions comprising the fluoroolefin-containing compositions as described herein for use in preparing foams. In other embodiments the invention provides foamable compositions, and preferably polyurethane and polyisocyanate foam compositions, and method of preparing foams. In such foam embodiments, one or more of the present fluoroolefin-containing compositions are included as a blowing agent in foamable compositions, which composition preferably includes one or more additional components capable of reacting and foaming under the proper conditions to form a foam or cellular structure. Any of the methods well known in the art, such as those described in "Polyurethanes Chemistry and Technology," Volumes I and II, Saunders and Frisch, 1962, John Wiley and Sons, New York, N.Y., may be used or adapted for use in accordance with the foam embodiments of the present invention.

The present invention further relates to a method of forming a foam comprising: (a) adding to a foamable composition a fluoroolefin-containing composition of the present invention; and (b) reacting the foamable composition under conditions effective to form a foam.

Further described herein is the use of the fluoroolefin-containing compositions as described herein for use as propellants in sprayable compositions. Additionally described is a sprayable composition comprising the fluoroolefin-containing compositions as described herein. The active ingredient to be sprayed together with inert ingredients, solvents and other materials may also be present in a sprayable composition. Preferably, the sprayable composition is an aerosol. Suitable active materials to be sprayed include, without limitations, cosmetic materials, such as deodorants, perfumes, hair sprays, cleaners, and polishing agents as well as medicinal materials such as antiasthma and anti-halitosis medications.

Further described herein is a process for producing aerosol products comprising the step of adding a fluoroolefin-containing composition as described herein to active ingredients in an aerosol container, wherein said composition functions as a propellant.

### EXAMPLES

### EXAMPLE 1

### Impact of vapor leakage

A vessel is charged with an initial composition at a temperature of either -25 °C or if specified, at 25 °C, and the initial vapor pressure of the composition is measured. The composition is allowed to leak from the vessel, while the temperature is held constant, until 50 weight percent of the initial composition is removed, at which time the vapor pressure of the composition remaining in the vessel is measured. Results are shown in Table 7.

**TABLE 7**

| Composition wt% | Initial P (Psia) | Initial P (kPa) | After 50% Leak (Psia) | After 50% Leak (kPa) | Delta P (%) |
|---|---|---|---|---|---|
| trans-HFC-1234ze/isobutane | | | | | |
| 77.9/22.1 | 12.9 | 89 | 12.9 | 89 | 0.0% |
| 90/10 | 12.6 | 87 | 12.4 | 85 | 1.6% |
| 99/1 | 11.4 | 79 | 11.3 | 78 | 1.1% |
| 60/40 | 12.6 | 87 | 12.3 | 85 | 2.4% |
| 39/61 | 11.7 | 81 | 10.6 | 73 | 9.8% |
| 38/62* | 11.7 | 81 | 10.5 | 72 | 10.1% |

### * Reference Example

The difference in vapor pressure between the original composition and the composition remaining after 50 weight percent is removed is less then about 10 percent for compositions of the present invention. This indicates that the compositions of the present invention would be azeotropic or near-azeotropic.

## Claims

1. A composition comprising:
39 to 99 weight percent trans-HFC-1234ze and 61 to 1 weight percent isobutane.

2. The composition of claim 1 comprising:
77.9 weight percent trans-HFC-1234ze and 22.1 weight percent isobutane;
90 weight percent trans-HFC-1234ze and 10 weight percent isobutane;
99 weight percent trans-HFC-1234ze and 1 weight percent isobutane;
60 weight percent trans-HFC-1234ze and 40 weight percent isobutane; or
39 weight percent trans-HFC-1234ze and 61 weight percent isobutane.

3. The composition of claim 1 comprising:
98 weight percent trans-HFC-1234ze, 1 weight percent HFC-1243zf and 1 weight percent isobutane;
98 weight percent trans-HFC-1234ze, 1 weight percent isobutane and 1 weight percent DME;
98 weight percent trans-HFC-1234ze, 1 weight percent isobutane and 1 weight percent CF₃I; or
98 weight percent trans-HFC-1234ze, 1 weight percent isobutane and 1 weight percent CF₃SCF₃.

4. The composition of claim 1 comprising 55.5 weight percent trans-HFC-1234ze, 28.7 weight percent isobutane and 15.8 weight percent DME.

5. The composition of any one of claims 1 to 4 which is an azeotropic or near-azeotropic composition at -25°C.

6. A blowing agent comprising the composition of any one of claims 1 to 5.

7. The blowing agent of claim 6 which is used for preparing foams.

8. A foamable composition comprising the composition of any one of claims 1 to 5 as a blowing agent.

9. The foamable composition of claim 8 which is a polyurethane or polyisocyanate foam composition.

10. The foamable composition of claim 8 or 9, further comprising one or more additional components capable of reacting and foaming to form a foam or cellular structure.

11. Use of a composition of any one of claims 1 to 5 as a foam blowing agent.

12. A method of forming a foam comprising:
(a) adding the composition of any one of claims 1 to 5 to a foamable composition; and
(b) reacting the foamable composition under conditions effective to form a foam.

## Patentansprüche

1. Zusammensetzung, umfassend:
39 bis 99 Gewichtsprozent trans-HFC-1234ze und 61 bis 1 Gewichtsprozent Isobutan.

2. Zusammensetzung nach Anspruch 1, umfassend:
77,9 Gewichtsprozent trans-HFC-1234ze und 22,1 Gewichtsprozent Isobutan;
90 Gewichtsprozent trans-HFC-1234ze und 10 Gewichtsprozent Isobutan;
99 Gewichtsprozent trans-HFC-1234ze und 1 Gewichtsprozent Isobutan;
60 Gewichtsprozent trans-HFC-1234ze und 40 Gewichtsprozent Isobutan; oder 39 Gewichtsprozent trans-HFC-1234ze und 61 Gewichtsprozent Isobutan.

3. Zusammensetzung nach Anspruch 1, umfassend:
98 Gewichtsprozent trans-HFC-1234ze, 1 Gewichtsprozent HFC-1243zf und 1 Gewichtsprozent Isobutan;
98 Gewichtsprozent trans-HFC-1234ze, 1 Gewichtsprozent Isobutan und 1 Gewichtsprozent DME;
98 Gewichtsprozent trans-HFC-1234ze, 1 Gewichtsprozent Isobutan und 1 Gewichtsprozent CF3I; oder
98 Gewichtsprozent trans-HFC-1234ze, 1 Gewichtsprozent Isobutan und 1 Gewichtsprozent CF3SCF3.

4. Zusammensetzung nach Anspruch 1, umfassend 55,5 Gewichtsprozent trans-HFC-1234ze, 28,7 Gewichtsprozent Isobutan und 15,8 Gewichtsprozent DME.

5. Zusammensetzung nach einem der Ansprüche 1 bis 4, die eine azeotrope oder nahezu azeotrope Zusammensetzung bei -25 °C ist.

6. Treibmittel, umfassend die Zusammensetzung nach einem der Ansprüche 1 bis 5.

7. Treibmittel nach Anspruch 6, das zum Herstellen von Schäumen verwendet wird.

8. Schäumbare Zusammensetzung, umfassend die Zusammensetzung nach einem der Ansprüche 1 bis 5 als Treibmittel.

9. Schäumbare Zusammensetzung nach Anspruch 8, die eine Polyurethan- oder Polyisocyanatschaumzusammensetzung ist.

10. Schäumbare Zusammensetzung nach Anspruch 8 oder 9, weiterhin umfassend eine oder mehrere zusätzliche Komponenten mit der Fähigkeit zum Reagieren und Schäumen zwecks Bildung eines Schaums oder einer Zellstruktur.

11. Verwendung einer Zusammensetzung nach einem der Ansprüche 1 bis 5 als Schaumtreibmittel.

12. Verfahren zum Bilden eines Schaums, umfassend:
(a) Zugeben der Zusammensetzung nach einem der Ansprüche 1 bis 5 zu einer schäumbaren Zusammensetzung; und
(b) Umsetzen der schäumbaren Zusammensetzung unter Bedingungen, die zum Bilden eines Schaums wirksam sind.

## Revendications

1. Composition comprenant :
33 à 99 pour cent en poids de trans-HFC-1234ze et 61 à 1 pour cent en poids d'isobutane.

2. Composition selon la revendication 1, comprenant :
77,9 pour cent en poids de trans-HFC-1234ze et 22,1 pour cent en poids d'isobutane,
90 pour cent en poids de trans-HFC-1234ze et 10 pour cent en poids d'isobutane,
99 pour cent en poids de trans-HFC-1234ze et 1 pour cent en poids d'isobutane,
60 pour cent en poids de trans-HFC-1234ze et 40 pour cent en poids d'isobutane, ou
39 pour cent en poids de trans-HFC-1234ze et 61 pour cent en poids d'isobutane.

3. Composition selon la revendication 1, comprenant :
98 pour cent en poids de trans-HFC-1234ze, 1 pour cent en poids d'HFC-1243zf et 1 pour cent en poids d'isobutane,
98 pour cent en poids de trans-HFC-1234ze, 1 pour cent en poids d'isobutane et 1 pour cent en poids de DME,
98 pour cent en poids de trans-HFC-1234ze, 1 pour cent en poids d'isobutane et 1 pour cent en poids de CF3I, ou
98 pour cent en poids de trans-HFC-1234ze, 1 pour cent en poids d'isobutane et 1 pour cent en poids de CF3SCF3.

4. Composition selon la revendication 1, comprenant 55,5 pour cent en poids de trans-HFC-1234ze, 28,7 pour cent en poids d'isobutane et 15,8 pour cent en poids de DME.

5. Composition selon l'une quelconque des revendications 1 à 4, qui est une composition azéotropique ou quasi-azéotropique à -25 °C.

6. Agent de gonflement comprenant la composition selon l'une quelconque des revendications 1 à 5.

7. Agent de gonflement selon la revendication 6, utilisé pour préparer des mousses.

8. Composition expansible comprenant la composition selon l'une quelconque des revendications 1 à 5 en tant qu'agent de gonflement.

9. Composition expansible selon la revendication 8, qui est une composition de mousse de polyuréthane ou de polyisocyanate.

10. Composition expansible selon la revendication 8 ou 9, comprenant en outre un ou plusieurs constituants additionnels capables de réagir et de mousser pour former une mousse ou une structure cellulaire.

11. Utilisation d'une composition selon l'une quelconque des revendications 1 à 5 en tant qu'agent de gonflement de mousse.

12. Procédé pour former une mousse comprenant les étapes consistant à :
(a) ajouter la composition selon l'une quelconque des revendications 1 à 5 à une composition expansible, et
(b) faire réagir la composition expansible dans des conditions efficaces pour former une mousse.
